# EUROPÄISCHE PATENTANMELDUNG

(11) **EP 2 725 257 A1**
(43) Veröffentlichungstag der Anmeldung: **30.04.2014**
(21) Anmeldenummer: 12189555.1
(22) Anmeldetag: 23.10.2012
(51) Int. Cl.: F16D 69/04

(54) **Bremsschuh für eine Aufzugsanlage**

(71) Anmelder: Inventio AG, 6052 Hergiswil (CH)
(72) Erfinder: Meierhans, Daniel, 6003 Luzern (CH); Junig, Marcus, 6020 Emmenbrücke (CH); Osmanbasic, Faruk, 6330 Cham (CH)
(74) Vertreter: Blöchle, Hans

(57) **Zusammenfassung**

Ein Bremsschuh für eine Sicherheitseinrichtung einer Aufzugsanlage zum Abbremsen einer Aufzugskabine, wobei der Bremsschuh wenigstens zwei Reibkörper (28) mit jeweils einer Reibfläche (28.1) umfasst, mit welchen die Reibkörper (28) zur Abbremsung der Aufzugskabine an eine im Aufzugsschacht fest installierte Aufzugsführungsschiene anpressbar sind. Die Reibkörper (28) sind dabei in einem Reibkörperbett (27) des Bremsschuhs (20) gehalten, und die Reibkörper (28) sind im Reibkörperbett (27) direkt oder indirekt aneinander abgestützt angeordnet.

## Beschreibung

Die Erfindung betrifft einen Bremsschuh für eine Sicherheitseinrichtung einer Aufzugsanlage zum Abbremsen einer Aufzugskabine, eine derartige Sicherheitseinrichtung und eine Aufzugsanlage mit einer derartigen Sicherheitseinrichtung sowie ein Verfahren zum Steuern einer Sicherheitseinrichtung gemäss den Oberbegriffen der unabhängigen Ansprüche.

Personenaufzüge in Wohnhäusern, Aussichtstürmen, usw., müssen über eine von der Betriebsbremse unabhängige Notbremse oder Notbremseinrichtung verfügen. Eine solche Notbremse ist als Fangvorrichtung ausgelegt, die, im Notfall, d.h. z.B. bei Überschreitung einer vorgegebenen Maximalgeschwindigkeit des Fahrkorbes, den Fahrkorb mit einer personenverträglichen Verzögerung abbremst und in der abgebremsten, stillstehenden Position sicher hält. Eine entsprechende Fangvorrichtung ist beispielsweise in der WO 2001/89973 beschrieben.

Das Abbremsen erfolgt typischerweise durch Anpressen von Bremsbelägen eines am Fahrkorb angeordneten Bremsschuhs an Führungsschienen im Aufzugsschacht. Es ist bekannt, derartige Bremsbeläge aufgrund vorteilhafter Materialeigenschaften aus Keramiken anzufertigen. Allerdings ist der Einsatz von rein keramischen Bremsbelägen mit grösserer flächenmässiger Erstreckung aufgrund der spröden Materialeigenschaften z.B. bei auftretender Biegebeanspruchung heikel.

Zur Verbesserung werden daher Kompositmaterialien mit einem keramischen Basismaterial für die Bremsteile vorgesehen. Das Basismaterial kann z.B. Siliziumkarbid und Kohlenstoff umfassen. Dabei können Verstärkungsfasern aus Kohlenstoff mit einer Länge von typischerweise wenigstens 10 mm zum Einsatz kommen. Derartige Bremsteile sind beispielsweise in der EP 1 188 947 beschrieben. Solche Verbundkeramiken weisen zwar verbesserte Materialeigenschaften auf. Die Herstellung von Bremsbelägen mit grösserer flächenmässiger Erstreckung ist aber auch in diesem Fall kostenintensiv und damit nur bedingt wirtschaftlich. Insbesondere müssen die Bremsbeläge auf die jeweiligen Bedürfnisse hin gefertigt werden, wobei z.B. unterschiedliche Grössen etc. zu berücksichtigen sind. Die Stückzahlen fallen daher in der Regel gering aus, was die Kosten weiter erhöht.

US A 5,964,320 schlägt einen Bremsschuh für Aufzugnotbremseinrichtungen vor, bei welchem sich eine Bremsfläche aus einer Vielzahl von Reibflächen einzelner, weitgehend identischer kleinerer Bremsteile zusammengesetzt. Die Bremsteile haben einen weitgehend zylindrischen Querschnitt und sind in einer Halteplatte des Bremsschuhs voneinander beabstandet in einzelnen Halterungen gehaltert. Die Bremsteile stehen dabei über die Halteplatte vor. Derartige Bremsschuhe sind zwar kostengünstiger in der Herstellung, da unterschiedliche wirksame Bremsflächen mit mehreren einheitlichen Bremsteilen bereitgestellt werden können. Allerdings haben diese Bremsschuhe ein ungünstiges Verhältnis zwischen effektiver Bremsfläche und Gesamtbaugrösse des Bremsschuhs und weisen somit eine schlechte Platzausnutzung auf.

Es ist daher die Aufgabe der vorliegenden Erfindung, die Nachteile des Standes der Technik zu überwinden. Insbesondere ist es eine Aufgabe der Erfindung, einen Bremsschuh bereitzustellen, welcher kostengünstig in der Herstellung und dem Betrieb sowie vielseitig anwendbar ist. Zudem ist es eine Aufgabe der Erfindung einen Bremsschuh bereitzustellen, welcher bei geringem Platzbedarf verbesserte Bremseigenschaften aufweist.

Diese Aufgaben werden durch die Merkmale des Anspruchs 1 gelöst. Dieser betrifft einen Bremsschuh für eine Fangvorrichtung, bzw. eine Sicherheitseinrichtung einer Aufzugsanlage zum Abbremsen einer Aufzugskabine, wobei der Bremsschuh wenigstens zwei Reibkörper mit jeweils einer Reibfläche umfasst. Die Reibkörper sind mit den Reibflächen zur Abbremsung der Aufzugskabine an eine im Aufzugsschacht fest installierte Aufzugsführungsschiene anpressbar. Dabei sind die Reibkörper in einem Reibkörperbett des Bremsschuhs gehalten. Die Erfindung zeichnet sich dadurch aus, dass die Reibkörper im Reibkörperbett direkt oder indirekt aneinander abgestützt sind.

"Aneinander abgestützt" bezeichnet hierbei, dass jeder der wenigstens zwei, direkt oder indirekt, aneinander abgestützten Reibkörper die Beweglichkeit des jeweils anderen Reibkörpers in wenigstens einer Richtung beschränkt. Damit ist der Vorteil verbunden, dass nicht für jeden Reibkörper eine vollständig festlegende separate Halterung vorgesehen zu werden braucht. Insbesondere braucht nicht jeder einzelne Reibkörper von einer Halterung allseitig umfasst zu sein. Die Reibkörper müssen nur in diesen Bereichen am Bremsschuh bzw. am Reibkörperbett abgestützt sein, in welchen sie nicht bereits am weiteren Reibkörper abgestützt sind. Auf diese Weise kann eine Baugrösse des Bremsschuhs bei gleicher wirksamer Gesamtbremsfläche reduziert werden. Insbesondere können die einzelnen Reibkörper, sofern erwünscht, zur optimalen Platzausnützung auch direkt aneinander stossen, d.h. direkt aneinander abgestützt sein. Es versteht sich, dass ein Reibkörper auch an mehreren weiteren Reibkörpern abgestützt sein kann, falls mehr als zwei Reibkörper vorhanden sind.

Bevorzugt sind die Reibkörper derart in dem Reibkörperbett angeordnet, dass die Reibflächen im Wesentlichen in einer gemeinsamen Reibebene liegen. Dabei sind die Reibkörper in einer Richtung aneinander abgestützt, welche weitgehend parallel zu der Reibebene liegt. Die Reibebene ist, zumindest im Bremsfall, parallel zu der Aufzugsführungsschiene ausgerichtet, womit die beim Bremsen auftretende Reibungskraft hauptsächlich in dieser Ebene wirkt. In einer Richtung der beim Bremsen wirkenden Anpresskraft, d.h. im Wesentlichen senkrecht zur Reibebene, sind die Reibkörper typischerweise z.B. an einer Auflagefläche des Reibkörperbetts abgestützt.

Die wenigstens zwei Reibkörper ergeben mit ihren jeweiligen Reibflächen zusammen eine gesamthaft wirksame Bremsfläche. Durch Variation der Anzahl von Reibkörpern (z.B. zwei, drei oder mehrere) können unterschiedlich grosse wirksame Bremsflächen zusammengesetzt werden. Der Bremsschuh kann somit kostengünstig an verschiedene Bremstypen angepasst werden, indem identische Reibkörper für unterschiedlich grosse oder unterschiedlich geformte Bremsflächen zur Anwendung kommen. Darüber hinaus reduziert sich auch ein Bearbeitungsaufwand von z.B. schwierig zu bearbeitenden keramischen Reibkörpern, da die gesamte Bremsfläche nicht einteilig geformt zu werden braucht.

Erfindungsgemässe Bremsschuhe kommen beispielsweise in Fangvorrichtungen zum Einsatz, wie sie in der eingangs erwähnten WO 2001/89973 beschrieben sind.

Bevorzugt sind die wenigstens zwei Reibkörper in einer vorgesehenen Reibrichtung hintereinander im Reibkörperbett angeordnet und in dieser Richtung aneinander abgestützt. Die vorgesehene Reibrichtung bezeichnet hierbei diejenige Richtung, in welcher die Reibungskraft während des Bremsens auf die Reibkörper bzw. den Bremsschuh wirkt. Vorzugsweise sind die wenigstens zwei Reibkörper in der vorgesehenen Reibrichtung in das Reibkörperbett einschiebbar. Grundsätzlich können die wenigstens zwei Reibkörper aber auch in einer Richtung quer zur Reibrichtung nebeneinander angeordnet und aneinander abgestützt sein, wenn z.B. die wirksame Bremsfläche in dieser Richtung vergrössert werden soll.

Mit Vorteil sind die Reibkörper gegen ein Herausfallen in Anpressrichtung gesichert. Dies ist insbesondere in einem Bereitschaftszustand vorteilhaft, in welchem die Reibkörper von der Führungsschiene abgehoben sind und somit von keiner externen Kraft in das Reibkörperbett gepresst werden. Bevorzugt sind die wenigstens zwei Reibkörper daher in der vorgesehenen Anpressrichtung, unabhängig von der konkreten Gestaltung des Reibkörperbetts, durch Kraftschluss und/oder Formschluss im Reibkörperbett gehalten.

Im Falle eines Formschlusses weisen das Reibkörperbett und die Reibkörper einander komplementär entsprechende Haltemittel auf. Beispielsweise können z.B. T-Profilschienen an einer Auflagefläche ausgebildet sein, welche von den Reibkörpern mit entsprechenden Ausnehmungen umgriffen sind. Ebenso können z.B. Schwalbenschwanzprofilschienen zum Einsatz kommen. Weiter kann das Reibkörperbett, insbesondere Begrenzungen der Aufnahme, Hinterschnitte wie z.B. Nuten oder keilförmige Aufweitungen aufweisen, in welche die Haltemittel des Reibkörpers eingreifen.

Im Falle eines Kraftschlusses können Haltemittel am Reibkörperbett und/oder am Reibkörper vorhanden sein. Beispielsweise können im Reibkörperbett oder am Reibkörper Klemmfedern vorgesehen sein, welche von den Seiten her, d.h. in einer Richtung parallel zur Reibebene, kraftschlüssig gegen die Reibkörper bzw. das Reibkörperbett drücken. Selbstverständlich können die Klemmfedern auch ein entsprechende seitliche Nuten der Reibkörper bzw. des Reibkörperbetts eingreifen und so einen zusätzlichen Formschluss herstellen.

Die Erfindung betrifft daher auch einen Reibkörper für einen erfindungsgemässen Bremsschuh, insbesondere mit Haltemitteln zur formschlüssigen und/oder kraftschlüssigen Halterung im Reibkörperbett des Bremsschuhs. Bevorzugt ist der Reibkörper dabei weitgehend quaderförmig ausgebildet und weist bevorzugt an gegenüberliegenden Seiten jeweils ein Haltemittel sowie vorzugsweise eine rechteckige Reibfläche auf. Vorzugsweise umfasst der Reibkörper einen faserverstärkten, keramischen Verbundwerkstoff und besteht insbesondere aus einem derartigen Verbundwerkstoff. Die Erfindung betrifft auch eine Verwendung eines derartigen Reibkörpers in einem Bremsschuh für eine Aufzugsanlage.

Mit Vorteil sind die wenigstens zwei Reibkörper in einer gemeinsamen Aufnahme des Reibkörperbetts angeordnet. "Gemeinsame Aufnahme" bezeichnet hierbei eine einzelne Aufnahme, in welcher beide Reibkörper anordenbar bzw. angeordnet sind. Mit anderen Worten heisst dies, dass die gemeinsame Aufnahme derart durchgehend ausgebildet ist, dass die wenigstens zwei Reibkörper aneinander stossend darin anordenbar sind. Die Aufnahme kann z.B. eine Vertiefung wie z.B. eine wannenförmige Ausnehmung umfassen, in welche die Reibkörper eingesetzt sind bzw. einsetzbar sind. Alternativ kann die gemeinsame Aufnahme aber auch von einer Auflagefläche bereitgestellt sein, auf welcher die Reibkörper aneinander abgestützt anordenbar sind. Die Reibkörper können dabei über zusätzliche Mittel wie z.B. über entsprechende Anschläge oder an Führungsschienen der Auflagefläche direkt oder indirekt am Bremsschuh bzw. am Reibkörperbett abgestützt sein.

Bevorzugt ist die gemeinsame Aufnahme als längliche Nut ausgebildet, in welcher die Reibkörper anordenbar bzw. angeordnet sind. Mit Vorteil ist die Nut derart ausgebildet, dass die Reibkörper in Längsrichtung der Nut in diese eingebracht bzw. eingeschoben werden können. Die Reibflächen der Reibkörper stehen dabei bevorzugt über die Nut vor. Die wenigstens zwei Reibkörper sind bevorzugt in Längsrichtung der Nut hintereinander in der Nut angeordnet und in Querrichtung direkt der indirekt, bevorzugt an den Seitenwänden der Nut, abgestützt. Hierzu weist die Nut bevorzugt eine Breite auf, welche im Wesentlichen einer entsprechenden Dimension der Reibkörper entspricht. Endseitig können Anschläge an der Nut vorgesehen sein, an welchen die Reibkörper direkt oder indirekt abgestützt sind.

Auf diese Weise ergibt sich eine konstruktiv einfache Halterung mit geringem Platzbedarf. Zudem erübrigen sich aufwändige Befestigungsbohrungen oder andere Befestigungsmassnahmen an den Reibkörpern. Schliesslich können die Reibkörper z.B. zu Wartungszwecken auf einfache Weise ausgetauscht werden.

Die längliche Nut ist mit Vorteil längs der vorgesehenen Reibrichtung am Bremsschuh angeordnet. Eine derartige Ausrichtung erlaubt, die wenigstens zwei Reibkörper in Reibrichtung hintereinander anzuordnen. Selbstverständlich kann je nach Erfordernis die Nut z.B. auch quer zur vorgesehenen Reibrichtung angeordnet sein, womit in diesem Fall die Reibkörper bezüglich der Reibrichtung nebeneinander angeordnet sind.

Mit Vorteil ist die als Nut ausgebildete Aufnahme entsprechend einem Innenquerschnitt eines C-Profils oder eines Schwalbenschwanzprofils ausgebildet. Aufgrund der durch diese Profile bereitgestellten Hinterschnitte kann, wie oben erwähnt, bei geeigneter Ausbildung der Reibkörper auf einfache Weise ein Formschluss und/oder Kraftschluss zwischen Reibkörperbett und Reibkörpern hergestellt werden. Die Hinterschnitte sind, bei entsprechender Ausrichtung der Nut bezüglich einer vorgesehenen Anpressrichtung, in senkrechter Richtung zum Nutboden hinterschnitten. Die Hinterschnitte der Profile können z.B. als Aussparungen dienen, in welche entsprechend ausgebildete Haltemittel der Reibkörper formschlüssig eingreifen können. Ebenso können die Hinterschnitte auch als Aufnahmeräume z.B. für Klemmfedern zur kraftschlüssigen Halterung dienen. Aufgrund dieser Innenquerschnitte der Nut kann ein Herausfallen in der Anpressrichtung somit auf einfache Weise verhindert werden. Alternativ kann die Nut z.B. auch U-förmig ausgebildet sein, wobei in diesem Fall die Reibkörper z.B. über Kraftschluss (z.B. mittels Klemmfedern) oder über Formschluss (z.B. über zusätzliche Profilleisten) in der Aufnahme gegen ein Herausfallen gesichert werden können.

Bevorzugt ist das Reibkörperbett als Schiene mit einem entsprechenden Profil ausgebildet. Diese kann z.B. an einem Grundkörper des Bremsschuhs befestigt sein. Alternativ kann das Reibkörperbett, insbesondere die als Nut ausgebildete Aufnahme, auch direkt am Grundkörper ausgebildet sein.

Mit Vorteil sind die Reibkörper indirekt aneinander abgestützt, wobei ein Distanzhalter zwischen den wenigstens zwei Reibkörpern angeordnet ist. Derartige Distanzhalter haben den Vorteil, dass die Reibflächen der Reibkörper gegeneinander abgesetzt werden können. Dies kann z.B. für eine Temperaturverteilung der Reibkörper im Bremsfall vorteilhaft sein. Der Distanzhalter ist bevorzugt aus einem anderen Material als die wenigstens zwei Reibkörper gefertigt, insbesondere aus Stahl. Auf diese Weise können Bereiche der Bremsbeläge, welche z.B. nicht an der Erzeugung der Reibungskraft beteiligt sind, aus einem kostengünstigeren Material hergestellt sein. Bevorzugt ist der Distanzhalter weitgehend lose zwischen den Reibkörpern angeordnet und hält diese auf Abstand. Weist das Reibkörperbett Haltemittel zur Halterung der Reibkörper gegen ein Herausfallen in Anpressrichtung auf, kann der Distanzhalter im Querschnitt analog den Reibkörpern ausgebildet sein und z.B. ebenfalls in einen Hinterschnitt des Reibkörperbetts eingreifen.

Mit Vorteil ist eine äussere Oberfläche des Distanzhalters gegenüber den Reibflächen der wenigstens zwei Reibkörper entgegen der Anpressrichtung zurückversetzt, sodass sich zwischen den Reibkörpern Senken ergeben. Derartige Senken oder Vertiefungen können im Bremsfall entstehenden Abrieb schnell von den Reibflächenbereichen entfernen.

Im Gegensatz zu herkömmlichen durchgehenden Bremsbelägen derselben wirksamen Bremsfläche mit Senken können erfindungsgemäss die Senken auf einfache Weise und ohne aufwändiges Einfräsen oder andere Materialbearbeitung ausgebildet werden. Insbesondere lassen sich Reibkörper und Distanzhalter in der gewünschten Abfolge auf einfache Weise im Reibkörperbett anordnen.

Die Senken verlaufen bevorzugt quer zur vorgesehenen Reibrichtung. In Varianten können die Senken bei entsprechender Ausbildung der Reibkörper und des Distanzhalters auch unter einem Winkel zur Reibrichtung verlaufen. Die Senken sollten eine Breite von wenigstens etwa 1 bis 5 mm aufweisen, um ausreichend Abrieb aufnehmen zu können. Diese Breite kann durch eine entsprechende Dimensionierung des Distanzhalters vorgegeben werden. Allerdings sollte die Dimensionierung des Distanzhalters eine entsprechende Dimension der Reibkörper in der Regel nicht übersteigen.

Mit Vorteil erstrecken sich die Reibkörper, insbesondere auch der Distanzhalter, in einer Richtung quer zur vorgesehenen Reibrichtung im Wesentlichen über die gesamte Breite des Reibkörperbetts, insbesondere über die gesamte Breite der gemeinsamen Aufnahme. Auf diese Weise kann der vom Reibkörperbett bereitgestellte Platz optimal genutzt werden. Falls sich auch der Distanzhalter über dieselbe Breite wie die Reibkörper erstreckt, ist zudem eine optimale Abstützung sichergestellt.

Vorzugsweise weist das Reibkörperbett eine Lagerfläche zur Auflage der Reibkörper auf, über welche die Reibkörper entgegen der Anpressrichtung am Bremsschuh abgestützt sind. Die Lagerfläche weist bevorzugt eine Oberflächenstrukturierung auf, um einen Reibschluss in Richtung parallel zur Lagerfläche, insbesondere weitgehend parallel zu einer vorgesehenen Reibrichtung, zwischen den Reibkörpern und dem Reibkörperbett sicherzustellen. Auf diese Weise können aufgrund des Anpressdrucks über die Lagerfläche Kräfte in Reibrichtung aufgenommen werden. Entsprechende Halterungs- bzw. Abstützungsmittel am Bremsschuh bzw. am Reibkörperbett zur Halterung der Reibkörper können damit gegebenenfalls geringer dimensioniert werden. Geeignete Oberflächenstrukturen der Lagerfläche sind z.B. Querrillen, Widerhakenstrukturen oder Aufrauungen, welche im Bremsfall aufgrund der Anpresskraft in die Reibkörper "beissen".

Mit Vorteil umfasst der Bremsschuh wenigstens einen weiteren Reibkörper, der im Reibkörperbett angeordnet ist, wobei jeweils benachbarte Reibkörper direkt oder indirekt aneinander abgestützt sind. Insbesondere sind die Reibkörper bevorzugt hintereinander aufgereiht, sodass jeweils nur zwei Reibkörper aneinander abgestützt sind. Bevorzugt ist zwischen den benachbarten Reibkörpern jeweils ein Distanzhalter angeordnet. Es versteht sich, dass der Bremsschuh grundsätzlich beliebig viele Reibkörper umfassen kann.

Vorzugsweise sind die wenigstens zwei Reibkörper weitgehend quaderförmig und insbesondere im Wesentlichen gleichartig ausgebildet. "Weitgehend quaderförmig" bezeichnet hierbei grundsätzlich quaderförmige Körper, welche aufgrund von zusätzlichen Elementen wie z.B. Haltemitteln zur formschlüssigen Halterung in einem Reibkörperbett von einer reinen Quaderform abweichen können. Als reine Quaderform ist eine Form bezeichnet, bei welcher paarweise gegenüber liegende Seitenflächen parallel angeordnet sind. Die genannten zusätzlichen Elemente können z.B. Aussparungen und/oder Vorsprünge umfassen.

"Im Wesentlichen gleichartig" beizeichnet hierbei, dass die Reibkörper grundsätzlich austauschbar ausgebildet sind. Quaderförmige bzw. weitgehend quaderförmige Körper können vergleichsweise einfach aus Keramiken bzw. Verbundkeramiken gefertigt werden. Zudem ermöglichen quaderförmige Körper mit rechteckigen Reibflächen eine optimale Flächenausnutzung, da sie lückenlos aneinander anschliessend angeordnet werden können. Bevorzugt weisen die Reibkörper daher, auch unabhängig von der Formgebung des Reibköpers, eine rechteckige Reibfläche auf.

Die ebenen Seitenflächen eines quaderförmigen Körpers bzw. eines im Wesentlichen quaderförmigen Körpers sind besonders geeignet, um einen entsprechenden weiteren Reibkörper mit einer entsprechenden Seitenfläche daran abzustützen. Insbesondere findet ein Kräfteübertrag auf den weiteren Reibkörper über den gesamten Querschnitt des Reibkörpers statt und allfällig vorhandene Distanzhalter können als einfache Balken ebenfalls quaderförmig ausgebildet sein.

Für typische Anwendungen geeignet haben sich Reibkörper erweisen, deren Reibflächen-Abmessung 30mm x 40mm beträgt. Werden Distanzhalter von 5mm Dicke vorgesehen, können z.B. mit zwei, drei oder vier Reibkörpern Bremsbeläge mit einer Gesamtfläche (d.h. wirksame Bremsfläche und Senken) von 30mm x 85/130/175mm oder 40mm x 100/135/170mm verwirklicht werden. Die Reibflächen-Abmessungen sind vorzugsweise so gewählt, dass eine Reibfläche der Aufzugsführungsschiene ideal abgedeckt wird. Es versteht sich, dass die Reibkörper je nach Erfordernis auch anders bemessen und/oder geformt sein können. Bei anderen Formen ergeben sich im Allgemeinen allerdings sowohl eine weniger gute Flächenausnutzung wie auch eine ungünstigere Kraftübertragung der Abstützung.

Bevorzugt weisen die wenigstens zwei Reibkörper als Reibwerkstoff einen faserverstärkten, keramischen Verbundwerkstoff auf. Insbesondere bestehen die wenigsten zwei Reibkörper aus einem derartigen Verbundwerkstoff. Der Verbundwerkstoff umfasst bevorzugt eine Matrix aus Siliziumkarbid und Kohlenstoff, wobei die Verstärkungskomponente aus Kohlenstofffasern mit einer Mindestlänge von 10 mm gebildet ist. Ein Volumengehalt an Kohlenstofffasern im Reibkörper beträgt mit Vorteil zwischen 30% und 70%. Damit ist gewährleistet, dass eine genügend hohe Bruchzähigkeit und Thermoschockbeständigkeit gegeben ist. Mit dem Volumengehalt an Kohlenstofffasern kann das Material an spezifische Erfordernisse angepasst werden. In der Regel ist ein eher geringer Volumengehalt im genannten Bereich bei niedrigen Verschleissraten und für eine hohe Wärmeleitfähigkeit vorteilhaft, während ein eher hoher Volumengehalt bei hohen Anforderungen an die mechanische Stabilität bevorzugt sein kann. Selbstverständlich können die Reibkörper grundsätzlich auch aus anderen Materialien wie z.B. einer reinen Keramik oder auch gesinterten Bremsmaterialien gefertigt sein.

Mit Vorteil können das Reibkörperbett und/oder die Distanzhalter und/oder die Reibkörper jeweils mit wenigstens einem Temperaturfühler versehen sein, um eine Temperaturverteilung am Bremsschuh zu erfassen. Auf diese Weise kann der Bremsschuh im Bremsfall überwacht und, in Abhängigkeit einer Temperaturverteilung, z.B. die Anpresskraft variiert bzw. optimiert werden.

Dies ist besonders vorteilhaft, wenn im Reibkörperbett Aktoren vorgesehen sind, mit welchen eine Anpresskraft der Reibkörper steuerbar ist. In Abhängigkeit der Temperatur bzw. der Temperaturverteilung kann auf diese Weise durch die Aktoren die wirkende Anpresskraft angepasst werden. Im Gegensatz zu einteiligen Bremsbelägen kann erfindungsgemäss die Anpresskraft bereichsweise, für jeden Reibkörper einzeln angepasst werden. Bevorzugt sind die Aktoren daher derart beschaffen, dass die Anpresskraft für jeden Reibkörper individuell steuerbar ist. Grundsätzlich kann dies z.B. durch Hydraulikzylinder im Reibkörperbett erfolgen. Auf diese Weise kann bei Überhitzung in einem Bereich des Bremsschuhs die Anpresskraft z.B. gezielt verringert werden. Es versteht sich, dass die Hauptkomponente der Anpresskraft im Bremsfall z.B. durch Verkeilen des Bremsschuhs an der Führungsschiene oder durch eine auf den Bremsschuh wirkende Federanordnung der Sicherheitsanordnung erzeugt wird. Die vorliegend genannten Aktoren dienen dabei zur Variation der Anpresskraft um die Hauptkomponente und wirken zwischen Reibkörper und übrigem Bremsschuh.

Als konstruktiv einfache Ausführung umfassen die Aktoren mit Vorteil Piezodruckfolien, welche zwischen dem Reibkörperbett, insbesondere zwischen der Lagerfläche, und den Reibkörpern angeordnet sind. Piezodruckfolien können bei Anlegen einer elektrischen Spannung ihre Dicke verändern. Die mit der Ausdehnung verbundene Kraftwirkung überträgt sich auf den Reibkörper und kann somit zur Steuerung der Anpresskraft genutzt werden. Bevorzugt ist jedem Reibkörper eine gesonderte Piezodruckfolie zugeordnet.

Die Erfindung betrifft auch eine Sicherheitseinrichtung einer Aufzugsanlage zum Abbremsen eine Aufzugskabine, umfassend einen erfindungsgemässen Bremsschuh. Ebenso betrifft die Erfindung eine Aufzugsanlage, welche mit einer derartigen Sicherheitsvorrichtung versehen ist.

Weiter betrifft die Erfindung ein Verfahren zur Steuerung einer Sicherheitseinrichtung einer Aufzugsanlage zum Abbremsen einer Aufzugskabine mit einem Bremsschuh. Der Bremsschuh umfasst wenigstens zwei Reibkörper mit jeweils einer Reibfläche, mit welchen die Reibkörper zur Abbremsung der Aufzugskabine an eine im Aufzugsschacht fest installierte Aufzugsführungsschiene anpressbar sind. Bevorzugt ist der Bremsschuh gemäss der vorliegenden Erfindung ausgebildet, wobei vorzugsweise im Reibkörperbett Aktoren vorgesehen sind. Das Verfahren zeichnet sich dadurch aus, dass im Bremsfall eine wirkende Anpresskraft, insbesondere für jeden Reibkörper gesondert, angepasst wird. Die Anpassung der Anpresskraft erfolgt gegebenenfalls durch Aktoren, welche, vorzugsweise individuell, zwischen einem Reibkörperbett und darin angeordneten Reibkörpern des Bremsschuhs wirken. Auf diese Weise können z.B. unterschiedliche Temperaturzonen des Bremsschuhs bzw. der wirksamen Bremsfläche kompensiert werden.

Bevorzugt wird im Verfahren daher auch eine Temperaturbelastung der Reibkörper erfasst und die wirkende Anpresskraft in Abhängigkeit der Temperaturbelastung der Reibkörper angepasst. Dabei wird insbesondere die Anpresskraft der Reibkörper verringert, wenn eine Temperaturbelastung verhältnismässig hoch ist und/oder erhöht, falls eine Temperaturbelastung verhältnismässig niedrig ist. Hierzu sind das Reibkörperbett und/oder die Distanzhalter und/oder die Reibkörper des Bremsschuhs mit Vorteil mit wenigstens einem Temperaturfühler versehen.

Aus der nachfolgenden Detailbeschreibung und der Gesamtheit der Patentansprüche ergeben sich zudem weitere vorteilhafte Ausführungsformen und Merkmalskombinationen der Erfindung.

Die zur Erläuterung der Ausführungsbeispiele verwendeten Zeichnungen zeigen schematisch:
- Fig. 1a:: eine Aufzugsanlage mit einer Sicherheitsvorrichtung zum Abbremsen der Aufzugskabine mit zwei erfindungsgemässen Bremsschuhen;
- Fig. 1b:: eine Ausschnittsvergrösserung der Sicherheitsvorrichtung gemäss Fig. 1a;
- Fig. 2:: einen erfindungsgemässen Bremsschuh in einer Längsschnittansicht;
- Fig. 3a:: Ausschnittsansicht eines möglichen Querschnitts durch den Bremsschuh gemäss Fig. 2;
- Fig. 3b:: Reibkörper gemäss Fig. 3a;
- Fig. 3c:: Schnittschema zur Herstellung des Reibkörpers gemäss Fig. 3c;
- Fig. 4a:: Ausschnittsansicht eines weiteren möglichen Querschnitts durch den Bremsschuh gemäss Fig. 2;
- Fig. 4b:: Reibkörper gemäss Fig. 4a;
- Fig. 5:: Ausschnittsansichten eines weiteren möglichen Querschnitts durch den Bremsschuh gemäss Fig. 2;
- Fig. 6a-6c:: Ausschnittsansichten weiterer möglicher Querschnitte durch erfindungsgemässe Bremsschuhe;
- Fig. 7:: Ansicht gemäss Fig. 5 mit einer Piezodruckfolie.

Grundsätzlich sind in den Figuren gleiche Teile mit gleichen Bezugszeichen versehen.

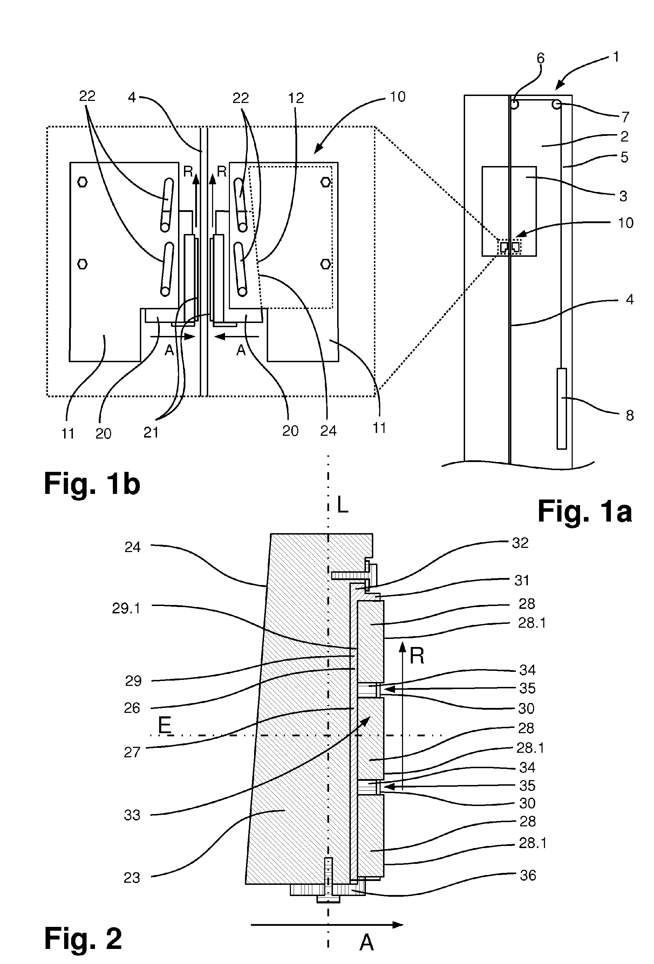

Figur 1a zeigt schematische eine Aufzugsanlage 1 mit einem Aufzugsschacht 2, in welchem eine Aufzugskabine 3 an Führungsschienen 4 in vertikaler Richtung verfahrbar ist. Die Aufzugskabine 3 ist über einen Seilstrang 5, welcher um eine Umlenkrolle 6 sowie eine Treibscheibe 7 eines Antriebs geführt ist, mit einem Gegengewicht 8 verbunden. Im Bereich der Führungsschiene 4 sind an der Aufzugskabine 3 Bremsbacken 20 einer Sicherheitsvorrichtung 10 angeordnet. Die Bremsbacken 20 auf (siehe Fig. 1b und 2) sind auf gegenüberliegenden Seiten der Führungsschiene 4 in Haltevorrichtungen 11 angeordnet.

Figur 1b zeigt eine Ausschnittsvergrösserung der Sicherheitsvorrichtung 10 der Fig. 1a. Die Bremsbacken 20 sind auf gegenüberliegenden Seiten der Führungsschiene 4 angeordnet. Der Führungsschiene 4 zugewandt weisen die Bremsbacken 20 Bremsflächen 21 auf. Die Bremsbacken 20 sind in der Haltevorrichtungen 11 in von unten nach oben zur Führungsschiene 4 hin schräg zusammenlaufenden Längsführungen 22 gelagert. Ein Grundkörper 23 des Bremsbackens 20, an welchem die Bremsflächen 21 angeordnet sind, weist an einer den Bremsflächen 21 gegenüberliegenden Seite eine Schrägfläche 24 auf. Eine Schräge der Schrägfläche 24 bezüglich der Führungsschiene 4 entspricht dabei im Wesentlichen der Schräge der Längsführungen 22. Die Schrägfläche 24 ist an einer entsprechend geneigten Steuerfläche 12 der Haltevorrichtung 11 abgestützt, auf welcher der Bremsbacken 20 mit der Schrägfläche 24 abgleiten kann.

Im Bremsfall werden die Bremsbacken 20 durch Verschiebung in den Längsführungen 22 mit ihren Bremsflächen 21 an die Führungsschiene 4 herangeführt und gegen diese gepresst. Eine durch den Kontakt der Bremsfläche 21 mit der Führungsschiene 4 wirkende Reibungskraft F ist nach oben gerichtet, falls eine Abwärtsfahrt der Aufzugskabine 3 gebremst wird. Aufgrund der Reibungskraft R werden die Bremsbacken 20 mit der Schrägfläche 24 an der Steuerfläche 12 abgestützt gegen die Führungsschiene 4 verkeilt. Auf diese Weise kann eine Anpresskraft A auf die Bremsbacken 20 erzeugt werden.

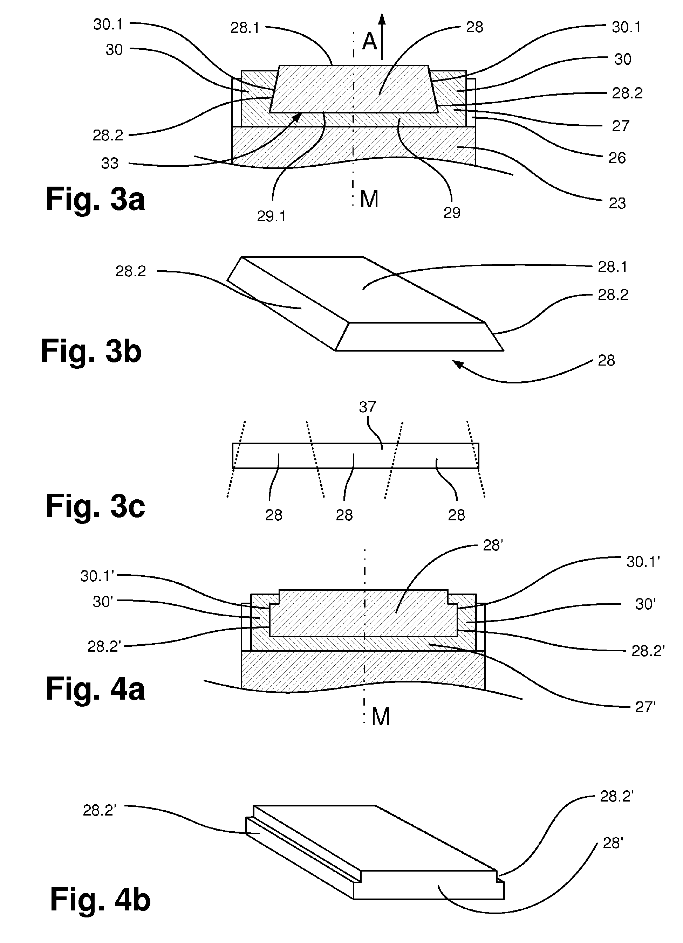

Figur 2 zeigt schematisch einen Längsschnitt durch den Bremsschuh in einer Längsmittelebene M (siehe z.B. Fig. 3a). Die Ebene M wird durch die Richtung der im Bremsfall wirkenden Anpresskraft A und einer Längsrichtung L des erfindungsgemässen Bremsschuhs 20 aufgespannt. Die Richtung der Reibungskraft R entspricht vorliegend im Wesentlichen der Längsrichtung L des Bremsschuhs 20 und ist somit parallel zur Ebene M angeordnet.

Der Grundkörper 23 des Bremsschuhs 20 weist bremsflächenseitig einen Haltebereich 26 auf, in welcher ein Reibkörperbett 27 angeordnet ist. Das Reibkörperbett 27 ist über einen in Reibrichtung R vorne (d.h. gemäss Fig. 1b oben) angeordneten Vorsprung 32 mit einer Verschraubung am Grundkörper 23 festgeklemmt. In einem in Reibrichtung R hinteren (d.h. unteren) Bereich ist das Reibkörperbett 27 über eine am Grundkörper 23 verschraubte, im Querschnitt L-förmige Befestigungsklammer 36 am Grundkörper 23 festgeklemmt. Der Haltebereich 26 des Grundkörpers 23 weist im Bereich des Vorsprungs 32 eine Abstufung auf, an welcher das Reibkörperbett 27 in Reibrichtung R abgestützt ist.

Im Reibkörperbett 27 sind, in Reibrichtung R hintereinander, drei weitgehend gleichartige Reibkörper 28 angeordnet. Jeder der Reibkörper 28 weist eine Reibfläche 28.1 auf, welche zusammen die gesamte wirksame Bremsfläche 21 ergeben. Das Reibkörperbett 27 weist eine Bodenplatte 29 auf, mit welcher es am Grundkörper 23 an einer Lagerfläche des Haltebereichs 26 anliegt. Eine vom Grundkörper 23 abgewandte Fläche der Bodenplatte 29 bildet eine Lagerfläche 29.1 für die Reibkörper 28. Bodenplatte 29 sowie Lagerfläche 29.1 sind dabei weitgehend senkrecht zur Richtung der vorgesehenen Anpresskraft A angeordnet.

Längs der seitlichen Ränder weist das Reibkörperbett 27 Seitenwände 30 auf, zwischen welchen die Reibkörper 28 angeordnet sind. Die Reibkörper 28 sind in Richtung senkrecht zur Ebene M an Innenwänden 30.1 (siehe z.B. Fig. 3a) der Seitenwände 30 abgestützt und stehen in Anpressrichtung A mit den Reibflächen 28.1 über einen Rand der Seitenwände 30 vor. Seitenwände 30 und Bodenplatte 29 bilden somit eine Profilschiene, welche in Längsrichtung L, d.h. vorliegend in Reibrichtung R, am Grundkörper 23 angeordnet ist. Der Innenraum dieser Profilschiene bildet eine Aufnahme 33 für die Reibkörper 28.

In Reibrichtung R vorne, d.h. in der Anordnung der Fig. 1b oben, weist das Reibkörperbett 27 einen Anschlag 31 auf, welcher die Aufnahme 33 in Reibrichtung R begrenzt. Der in Richtung von R vorderste bzw. oberste Reibkörper 28 stösst an den Anschlag 31 an und ist in Reibrichtung R an diesem abgestützt. Zwischen dem vordersten (obersten) und dem mittleren sowie dem mittleren und dem hintersten (untersten) der Reibkörper 28 ist jeweils ein Distanzhalter 34 angeordnet. Der hinterste der Reibkörper 28 stösst in einer Richtung entgegen R an eine Anschlagsfläche der Befestigungsklammer 36 und ist an dieser abgestützt, bzw. von dieser gehalten.

Die Distanzhalter 34 reichen von der Lagerfläche 29.1 bis knapp unter den Rand der Seitenwände 30. Die äusseren Oberflächen der Distanzhalter 34 sind somit gegenüber den Reibflächen 28.1 zur Lagerfläche 29.1 hin zurückversetzt. Auf diese Weise ergeben sich Senken 35 zwischen den Reibkörpern 28. In den Senken 35 kann im Bremsfall Abrieb der Reibkörper 28 oder Abrieb und Verschmutzungen der Aufzugsführungsschiene abgeführt werden. Die Distanzhalter 34 sind im Bremsfall nicht an der Erzeugung der Reibungskraft beteiligt und können daher aus kostengünstigem Material gefertigt sein. Bevorzugt kommen daher Distanzhalter 34 aus Stahl zum Einsatz. Die Reibkörper 28 hingegen sind für eine gute Bremsleistung bevorzugt aus einer hochwertigen Verbundkeramik gefertigt.

Reibkörper 28 und Distanzhalter 34 sind grundsätzlich lose in der Aufnahme 33 des Reibkörperbetts 27 angeordnet und werden einzig durch die Abstützung an den endseitigen Anschlägen 31 und 36 an einer Verschiebung in Längsrichtung L bzw. Reibrichtung R gehindert. Jeder der Reibkörper 28 ist zudem an seinem bzw. seinen benachbarten Reibkörper(n) 28 abgestützt, vorliegend indirekt über die Distanzhalter 34. Auf diese Weise wird eine platzsparende Halterung der Reibkörper 28 im Bremsschuh 20 bereitgestellt.

Figur 3a zeigt einen Querschnitt durch den Bremsschuh 20 in einer Ebene E, welche senkrecht auf der Längsrichtung L steht und durch einen der Reibkörper 28 geht (siehe Fig. 2). Figur 3b zeigt den Reibkörper 28 gemäss der Ausführungsform der Fig. 3a.

Die Innenwände 30.1 der Seitenwände 30 sind vom Rand der Seitewände 30 zur Lagerfläche 29.1 auseinander laufend angeordnet. Die Aufnahme 33 für die Reibkörper 28 hat somit den Querschnitt eines Schwalbenschwanz-Profils. Entsprechend weist der Reibkörper 28 an die Seitenwände 30.1 angrenzende Seitenflächen 28.2 auf, welche analog geneigt sind. Der Reibkörper 28 sitzt somit analog einem Läufer einer Schwalbenschwanzführung im Reibkörperbett 27. Insbesondere greift der Reibkörper 28 auf diese Weise in Hinterschnitte des Reibkörperbetts 27 ein und ist somit gegen ein Herausfallen in Richtung der Anpresskraft A formschlüssig gesichert.

Der Reibkörper 28 der Fig. 3b ist besonders einfach in der Herstellung, wie sich aus dem Schnittmuster der Fig. 3c erschliesst. Die für den Formschluss erforderlichen Mittel am Reibkörper 28 können auf einfache Weise durch geneigte Schnitte (gestrichelte Linien) einer Rohplatte 37 aus dem Reibkörpermaterial erzeugt werden.

Figur 4a zeigt einen weiteren mit dem Bremsschuh 20 konsistenten Querschnitt in der Ebene E und Fig. 4b zeigt einen entsprechenden Reibkörper 28'.

Ein weitgehend dem Reibkörperbett 27 der Fig. 2 und 3a entsprechendes Reibkörperbett 27' weist Innenwände 30.1' der Seitenwände 30' mit einer Abstufung auf, sodass die Aufnahme 33' für die Reibkörper 28' den Querschnitt eines C-Profils ergibt. Der Reibkörper 28' weist an seinen Seitenwänden 28.2' entsprechend komplementäre Abstufungen auf. Die Endfortsätze des C-Profils übergreifen den Reibkörper 28' im Bereich der Abstufungen und hindern ihn somit formschlüssig an einem Herausfallen in Richtung von A.

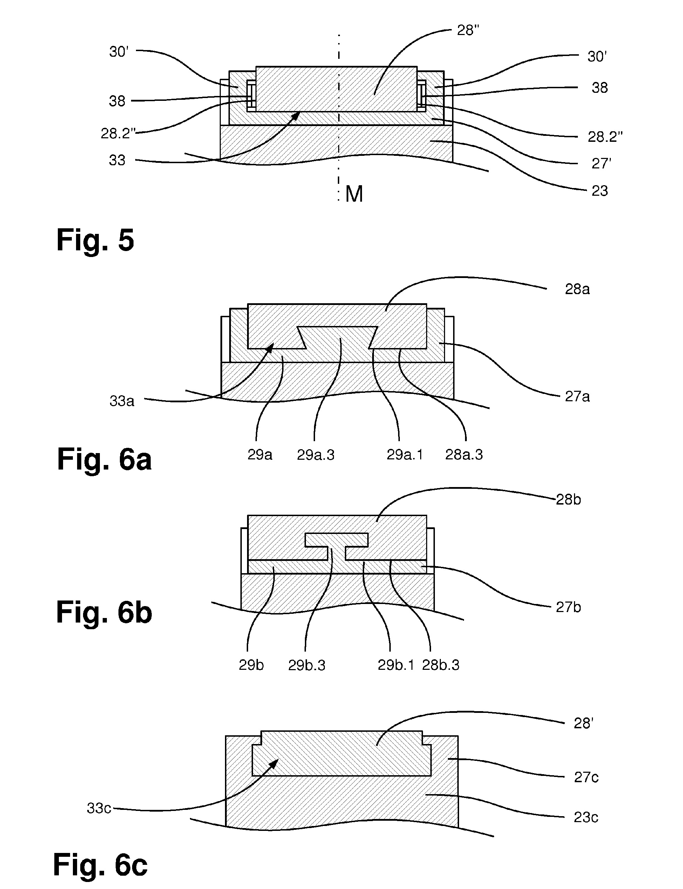

Figur 5 zeigt einen weiteren mit dem Bremsschuh 20 konsistenten Querschnitt in der Ebene E.

Die Ausführungsform gemäss Fig. 5 umfasst das Reibkörperbett 27' der Fig. 4a. Ein Reibkörper 28" ist allerdings rein quaderförmig, d.h. mit paarweise gegenüber liegenden, parallelen Seitenflächen ausgebildet. Auf diese Weise ergeben sich an den Seitenwänden 30.1' Freiräume, welche als Aufnahmeräume für Klemmfedern 38 dienen. Die Klemmfedern 38 sind zwischen den Seitenwänden 30' und Seitenflächen 28.2" des Reibkörpers 28" verklemmt und halten den Reibkörper 28" auf diese Weise kraftschlüssig in der Aufnahme 33' des Reibkörperbetts 27'.

Figuren 6a bis 6c zeigen weitere mögliche Querschnittsansichten in den Fig. 3 bis 5 entsprechenden Schnittebenen von weiteren Ausführungsformen erfindungsgemässer Bremsschuhe. Es erschliesst sich unmittelbar, wie die Ausführungsformen der Fig. 6a bis 6c auf den Bremsschuh 20 der Fig. 2 übertragen werden können.

Figur 6a zeigt einen Querschnitt einer möglichen Ausführungsform eines Reibkörperbetts 27a eines erfindungsgemässen Bremsschuhs. Eine Aufnahme 33a für Reibkörper 28a hat weitgehend den Querschnitt eines U-Profils. An einer Bodenplatte 29a des Reibkörperbetts 27a ist in Längsrichtung L mittig eine Schwalbenschwanzprofil-Leiste 29a.3 angeordnet. Das Schwalbenschwanzprofil 29a.3 verbreitert sich mit zunehmendem Abstand von der Bodenplatte 29a. Der Reibkörper 28a weist an einer Unterseite 28.3a, welche zur Auflage auf einer Lagerfläche 29a.1 der Aufnahme 33a vorgesehen ist, einen entsprechend komplementäre Längsnut auf. Der Reibkörper 28a ist mit der Längsnut auf der Schwalbenschwanzprofilleiste 29a.3 angeordnet und liegt mit seiner Unterseite 28a.3 auf der Lagerfläche 29a.1 der Bodenplatte 29a auf.

Figur 6b zeigt eine Ausführungsform eines Reibkörperbetts 27b ohne Seitenwände. An einer Bodenplatte 29b des Reibkörperbetts 27b ist in Längsrichtung L mittig eine T-Profilleiste 29b.3 ausgebildet, auf welcher ein Reibkörper 28b mit einer entsprechend komplementären Längsnut an seiner Unterseite 28b.3 angeordnet ist. Der Reibkörper 28b liegt dabei mit seiner Unterseite 28b.3 auf der Lagerfläche 29b.1 der Bodenplatte 29b auf.

Figur 6c zeigt eine Ausführungsform, bei welcher eine C-profilförmige Aufnahme 33c eines Reibkörperbetts 27c z.B. für einen Reibkörper 28' direkt in einem Grundkörper 23c eines Bremsschuhs ausgebildet ist.

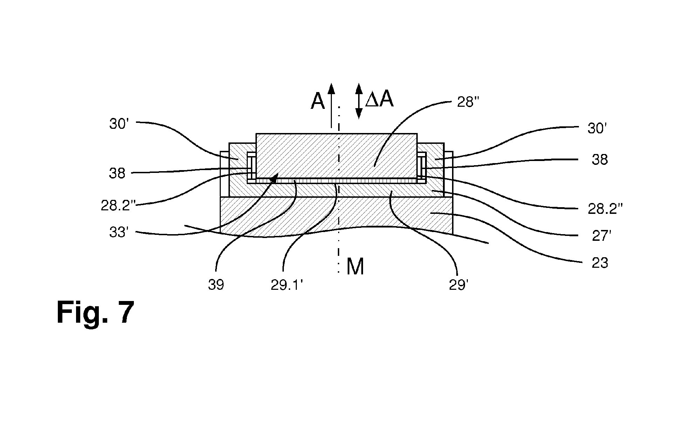

Figur 7 zeigt die Querschnittsansicht gemäss Fig. 5, wobei zwischen dem Reibkörper 28" und einer Lagerfläche 29.1' einer Bodenplatte 29' des Reibkörperbetts 27' eine Piezodruckfolie 39 angeordnet ist. Durch Anlegen einer Spannung and die Piezodruckfolie kann die Anpresskraft A auf den Reibkörper 28" um einen Betrag Delta A variiert werden. Dies kann z.B. in Abhängigkeit einer gemessenen Temperatur des Reibkörpers 28" und/oder weiterer Reibkörper erfolgen.

Sämtliche vorgängigen Abbildungen zeigen Reibkörper, welche im vorliegenden Sinne als "weitgehend quaderförmig" (Reibkörper 28, 28', 28a, 28b) oder rein quaderförmig (Reibkörper 28") angesehen werden. Insbesondere weisen die Reibkörper eine rein quaderförmige Grundform auf, welche gegebenenfalls mit entsprechenden Haltemitteln versehen ist. Beispielsweise weist der Reibkörper 28 seitlich angeformte keilförmige Leisten auf, sodass sich ein trapezförmiger Gesamtquerschnitt ergibt. Reibkörper 28' weist seitlich ausgebildete Aussparungen auf, sodass sich Abstufungen an den kanten der Reibfläche ergeben. Reibkörper 28a und 28b schliesslich weisen an der Unterseite Aussparungen in der Form von Längsnuten auf. Weitere vorteilhafte Ausbildungen der Reibkörper sowie des Reibkörperbetts erschliessen sich unmittelbar.

## Patentansprüche

1. Bremsschuh (20) für eine Sicherheitseinrichtung (10) einer Aufzugsanlage (1) zum Abbremsen einer Aufzugskabine (3), wobei der Bremsschuh (20) wenigstens zwei Reibkörper (28) mit jeweils einer Reibfläche (28.1) umfasst, mit welchen die Reibkörper (28) zur Abbremsung der Aufzugskabine (3) an eine im Aufzugsschacht (2) fest installierte Aufzugsführungsschiene (4) anpressbar sind, wobei die Reibkörper (28) in einem Reibkörperbett (27) des Bremsschuhs (20) gehalten sind, **dadurch gekennzeichnet, dass** die Reibkörper (28) im Reibkörperbett (27) direkt oder indirekt aneinander abgestützt angeordnet sind.

2. Bremsschuh (20) gemäss Anspruch 1, **dadurch gekennzeichnet, dass** die wenigstens zwei Reibkörper (28) in einer vorgesehenen Reibrichtung (R) hintereinander im Reibkörperbett (27) angeordnet und aneinander abgestützt sind.

3. Bremsschuh (20) gemäss einem der Ansprüche 1 oder 2, **dadurch gekennzeichnet, dass** die wenigstens zwei Reibkörper (28) in der vorgesehenen Anpressrichtung (A) durch Kraftschluss und/oder Formschluss im Reibkörperbett (27) gehalten sind.

4. Bremsschuh (20) gemäss einem der Ansprüche 1 bis 3, **dadurch gekennzeichnet, dass** die wenigstens zwei Reibkörper (28) in einer gemeinsamen Aufnahme (33) des Reibkörperbetts (27) angeordnet sind, welche bevorzugt als längliche Nut ausgebildet ist, die vorzugsweise längs der vorgesehenen Reibrichtung (R) am Bremsschuh (20) angeordnet ist, wobei die Nut bevorzugt entsprechend einem Innenquerschnitt eines C-Profils oder eines Schwalbenschwanzprofils ausgebildet ist, und das Reibkörperbett mit Vorteil als entsprechende Profilschiene ausgebildet ist.

5. Bremsschuh (20) gemäss einem der Ansprüche 1 bis 4, **dadurch gekennzeichnet, dass** die wenigstens zwei Reibkörper (28) indirekt aneinander abgestützt sind, wobei ein Distanzhalter (34) zwischen den wenigstens zwei Reibkörpern (28) angeordnet ist, welcher vorzugsweise aus einem anderen Material als die wenigstens zwei Reibkörper (28), insbesondere aus einem Stahl, gefertigt ist.

6. Bremsschuh (20) gemäss Anspruch 5, **dadurch gekennzeichnet, dass** eine äussere Oberfläche des Distanzhalters (34) gegenüber den Reibflächen (28.1) der wenigstens zwei Reibkörper (28) entgegen der Anpressrichtung (A) zurückversetzt ist, sodass sich zwischen den Reibkörpern (28) Senken ergeben.

7. Bremsschuh (20) gemäss einem der Ansprüche 5 bis 6, **dadurch gekennzeichnet, dass** sich die Reibkörper (R), insbesondere auch der Distanzhalter (34), in einer Richtung quer zur vorgesehenen Reibrichtung (R) im Wesentlichen über die gesamte Breite des Reibkörperbetts (27), insbesondere gegebenenfalls der gemeinsamen Aufnahme (33) des Reibkörperbetts (27), erstrecken.

8. Bremsschuh (20) gemäss einem der Ansprüche 1 bis 7, **dadurch gekennzeichnet, dass** der Bremsschuh (20) wenigstens einen weiteren Reibkörper (28) umfasst, der im Reibkörperbett (27), insbesondere gegebenenfalls in der gemeinsamen Aufnahme (33), angeordnet ist, wobei jeweils benachbarte Reibkörper (28) direkt oder indirekt aneinander abgestützt sind, wobei insbesondere zwischen den benachbarten Reibkörpern jeweils ein Distanzhalter (34) angeordnet ist.

9. Bremsschuh (20) gemäss einem der Ansprüche 1 bis 8, **dadurch gekennzeichnet, dass** alle Reibkörper (28) weitgehend quaderförmig und insbesondere im Wesentlichen gleichartig ausgebildet sind.

10. Bremsschuh (20) gemäss einem der Ansprüche 1 bis 9, **dadurch gekennzeichnet, dass** das Reibkörperbett (27) und/oder die Distanzhalter (34) und/oder die Reibkörper (28) jeweils mit wenigstens einem Temperaturfühler versehen sind, um eine Temperaturverteilung am Bremsschuh (20) zu erfassen.

11. Bremsschuh (20) gemäss einem der Ansprüche 1 bis 10, **dadurch gekennzeichnet, dass** im Reibkörperbett (27) Aktoren (39) vorgesehen sind, mit welchen ein Anpresskraft der Reibkörper (28), bevorzugt individuell, steuerbar ist, wobei die Aktoren bevorzugt Piezodruckfolien (39) umfassen, welche in Anpressrichtung (A) zwischen dem Reibkörperbett (27) und den Reibkörpern (28) angeordnet sind und vorzugsweise jedem Reibkörper (28) eine gesonderte Piezodruckfolie (39) zugeordnet ist.

12. Reibkörper (28) für einen Bremsschuh (20) gemäss einem der Ansprüche 1 bis 11, insbesondere mit Haltemitteln zur formschlüssigen und/oder kraftschlüssigen Halterung im Reibkörperbett (27) des Bremsschuhs (20) gemäss Anspruch 3, wobei der Reibkörper (28) vorzugsweise weitgehend quaderförmig ausgebildet ist und bevorzugt an gegenüberliegenden Seiten jeweils ein Haltemittel aufweist.

13. Sicherheitseinrichtung (10) einer Aufzugsanlage (1) zum Abbremsen eine Aufzugskabine (3), umfassend einen Bremsschuh (20) gemäss einem der Ansprüche 1 bis 11.

14. Aufzugsanlage (1) mit einer Sicherheitseinrichtung (10) gemäss Anspruch 13.

15. Verfahren zur Steuerung einer Sicherheitseinrichtung (10), insbesondere einer Sicherheitseinrichtung (10) gemäss Anspruch 13, einer Aufzugsanlage (1), insbesondere einer Aufzugsanlage (1) gemäss Anspruch 14, zum Abbremsen einer Aufzugskabine (3) mit einem Bremsschuh (20), wobei der Bremsschuh (20) wenigstens zwei Reibkörper (28) mit jeweils einer Reibfläche (28.1) umfasst, mit welchen die Reibkörper (28) zur Abbremsung der Aufzugskabine (3) an eine im Aufzugsschacht (2) fest installierte Aufzugsführungsschiene (4) anpressbar sind, vorzugsweise mit einem Bremsschuh (20) gemäss Anspruch 11, **dadurch gekennzeichnet, dass** im Bremsfall eine wirkende Anpresskraft (A), insbesondere für jeden Reibkörper (28) gesondert, angepasst wird.

16. Verfahren gemäss Anspruch 15, vorzugsweise zur Steuerung einer Sicherheitseinrichtung (10) mit einem Bremsschuh gemäss Anspruch 10, **dadurch gekennzeichnet, dass** eine Temperaturbelastung der Reibkörper (28) erfasst wird und dass die wirkende Anpresskraft (A) in Abhängigkeit der Temperaturbelastung der Reibkörper angepasst wird, wobei insbesondere:
- die Anpresskraft (A) der Reibkörper (28) verringert wird, wenn eine Temperaturbelastung verhältnismässig hoch ist und/oder
- die Anpresskraft (A) der Reibkörper (28) erhöht wird, falls eine Temperaturbelastung verhältnismässig niedrig ist.
